# FASCICULE DE BREVET EUROPEEN

(11) **EP 1 540 623 B1**
(45) Date de publication et mention de la délivrance du brevet: **21.12.2005**
(21) Numéro de dépôt: 03773795.4
(22) Date de dépôt: 19.09.2003
(51) Int. Cl.: G08G 5/04, G01C 23/00

(54) **INTERFACE HOMME-MACHINE DE COMMANDE DU PILOTE AUTOMATIQUE POUR AERODYNE PILOTE POURVU D'UN TERMINAL DE RESEAU DE TRANSMISSION ATN**
MENSCH-MASCHINE-SCHNITTSTELLE ZUR STEUERUNG DES AUTOPILOTEN EINES SCHWERER-ALS-LUFT-FLUGZEUGS, DAS MIT EINEM ATN-ÜBERTRAGUNGSNETZWERK-ENDGERÄT AUSGESTATTET IST
MAN-MACHINE INTERFACE FOR CONTROLLING THE AUTOMATIC PILOT OF A HEAVIER-THAN-AIR AIRCRAFT PROVIDED WITH AN ATN TRANSMISSION NETWORK TERMINAL

(30) Priorité: 20.09.2002 FR 0211683
(43) Date de publication de la demande: 15.06.2005
(73) Titulaire: Thales, 92526 Neuilly Sur Seine (FR)
(72) Inventeur: SUBELET, Michel, Thales Intellectual Property, F-94117 Arcueil Cedex (FR)
(74) Mandataire: Beylot, Jacques
(86) Numéro de dépôt international: PCT/FR2003/002769
(87) Numéro de publication internationale: WO 2004/027732

(56) Documents cités:
- WO-A-02/25214
- US-B1- 6 313 759
- PAINTER J H ET AL: "Decision support for the general aviation pilot" SYSTEMS, MAN, AND CYBERNETICS, 1997. COMPUTATIONAL CYBERNETICS AND SIMULATION., 1997 IEEE INTERNATIONAL CONFERENCE ON ORLANDO, FL, USA 12-15 OCT. 1997, NEW YORK, NY, USA,IEEE, US, 12 octobre 1997 (1997-10-12), pages 88-93, XP010248890 ISBN: 0-7803-4053-1

## Description

La présente invention concerne les aérodynes pilotés à pilote automatique et terminal de transmission numérique ATN.

Un aérodyne piloté comporte à bord, différents équipements destinés à permettre et faciliter son pilotage, dont des équipements de vol agissant sur les plans mobiles : gouvernes, volets, rotors, etc et sur les moteurs de l'aérodyne sous le contrôle du pilote, des capteurs de paramètres de vol et des équipements de communication permettant à l'équipage de l'aérodyne de communiquer avec les autres aéronefs évoluant dans son voisinage et avec des organismes de contrôle aérien assurant une aide à la navigation.

Les équipements de vol se répartissent en trois niveaux en fonction de leurs positions dans la chaîne d'actionnement des plans mobiles et des moteurs de l'aérodyne. Le premier niveau est constitué des commandes de vol agissant directement sur les actionneurs des plans mobiles et des moteurs. Elles permettent le pilotage manuel. Le deuxième niveau est constitué du pilote automatique et/ou directeur de vol qui agissent sur les commandes de vol, directement pour le pilote automatique et par l'intermédiaire du pilote pour le directeur de vol, et qui permettent au pilote d'asservir l'aérodyne sur une grandeur liée à la trajectoire de l'aérodyne : assiette, cap, pente, route, altitude, vitesse, écarts par rapport à des routes, etc... Le troisième niveau est constitué du calculateur de vol qui agit sur le pilote automatique et/ou directeur de vol et qui permet au pilote de tracer un plan de vol et de faire un suivi automatique du plan de vol adopté.

Le pilote dispose de manettes et/ou de pédales pour agir sur les commandes de vol et de deux interfaces homme-machine pour agir sur le pilote automatique et/ou directeur de vol et sur le calculateur de vol, l'une dite MCP (acronyme provenant de l'anglo-saxon :"Module Control Panel") ou FCU (acronyme provenant de l'anglo-saxon :"Flight Control Unit") et l'autre dite MCDU (acronyme provenant de l'anglo-saxon :"Multi Purpose Control Unit"). L'interface MCP/FCU privilégie la facilité d'utilisaüon. Elle est réservée uniquement à la commande du pilote automatique et/ou directeur de vol, soit par le pilote soit par le calculateur de vol. Placée, en bandeau, à la base du pare-brise de la cabine de pilotage, elle ne permet que la sélection et les paramétrages des principaux modes de fonctionnement du pilote automatique et/ou directeur de vol : maintien d'assiette, de cap, de pente, d'altitude, de vitesse, de route ou d'écart par rapport à une route. L'interface MCDU privilégie la finesse de contrôle. Elle est partagée entre le pilote automatique et/ou directeur de vol, le calculateur de vol et plus généralement tous les équipements de bord nécessitant des paramétrages, équipements qu'elle permet de commander et de régler dans le détail. Elle se présente sous la forme d'une calculette à touches et écran placée, par exemple, sur l'accoudoir central d'une cabine de pilotage à deux postes de pilotage côte à côte.

Les capteurs de paramètres de vol sont des capteurs de paramètres aérodynamiques : pression totale, pression statique, angle d'incidence, température de l'air, etc., des capteurs d'altitude tels qu'un altimètre barométrique ou radioélectrique et des capteurs d'attitude ou de position tels qu'une centrale inertielle ou un récepteur de navigation par satellites. Ils sont plus ou moins nombreux en fonction du degré d'équipement de l'aérodyne et permettent au pilote et aux équipements de vol, de situer l'aérodyne par rapport à son environnement.

Les équipements de communication embarqués à bord pour permettre à l'aérodyne d'échanger des informations avec le sol ou d'autres aérodynes passent par un réseau aéronautique de télécommunication dont ils constituent un terminal embarqué. Les réseaux aéronautiques de télécommunication plutôt orientés, à l'origine sur la phonie, tendent à se numériser pour une meilleure fiabilité, les échanges d'informations en numérique étant plus fiables que les échanges de phraséologie en phonie car ne dépendant pas de l'intonation d'un locuteur et de la compréhension orale d'un auditeur. C'est ainsi que l'Organisation de l'Aviation Civile Internationale a défini et normalisé un premier réseau aéronautique de télécommunications numériques connu sous la dénomination ACARS (acronyme provenant de l'expression anglo-saxonne :"Arinc Communication Adressing and Reporting System") puis un deuxième connu sous la dénomination ATN (acronyme provenant de l'expression anglo-saxonne :"Aeronautical Telecommunication Network") prévu pour remplir diverses catégories de tâches ou applications spécifiques dont une dite CPDLC (acronyme provenant de l'expression anglo-saxonne :"Controller-Pilot Data-Link Communication") concerne les échanges entre pilote et autorités de contrôle aérien relatifs aux ordres de modification de trajectoire ("clairance" en anglo-saxon). Le premier réseau aéronautique de télécommunication ACARS mis en service dans les années 70 est aujourd'hui massivement utilisé et en voie de saturation. Le deuxième réseau aéronautique de télécommunication ATN d'une plus grande capacité et d'une meilleure fiabilité est prévu pour remplacer à terme le réseau ACARS.

Les équipements de communication embarqués à bord d'un aérodyne sont accessibles de l'équipage, pour l'échange d'informations numérisées, au moyen d'une interface homme-machine spécifique telle que l'interface dite DCDU (acronyme provenant de l'expression anglo-saxonne :"Display Control Data Unit") et, éventuellement, par l'intermédiaire de l'interface MCDU.

Jusqu'à présent, les équipements de communication embarqués n'ont rien en commun avec les équipements de vol, à l'exception éventuelle de l'interface MCDU utilisée pour leurs réglages et paramétrages. Cela se justifiait entièrement lorsqu'ils ne transmettaient que de la phonie. C'est moins le cas maintenant qu'ils transmettent aussi des informations numériques. En effet, lorsque ces informations numériques proviennent d'une autorité de contrôle aérien et correspondent à une demande de modification de trajectoire immédiate ou à moyen terme ("clairance"), elles sont délivrées au pilote, soit sur l'écran de l'interface DCDU, soit sur l'écran de l'interface MCDU. Le pilote, qui en prend connaissance, doit, s'il les accepte les retranscrire sur l'interface MCP/FCU pour qu'elles soient prises en compte par le pilote automatique et/ou directeur de vol. Cette retranscription est une opération qui est une source de retard dans l'exécution d'une modification de trajectoire. Elle est en outre une source possible d'erreur, cela d'autant plus qu'elle intervient souvent à un moment crucial du vol notamment en approche d'un terrain d'atterrissage, alors que l'attention du pilote est déjà accaparée par de nombreuses autres tâches.

Le document US 6313759 par exemple, décrit un aérodyne selon l'état de la technique antérieure.

La présente invention a pour but de simplifier la tâche du pilote en automatisant cette retranscription, vers le pilote automatique et/ou directeur de vol, d'une demande de modification de trajectoire formulée par une autorité de contrôle aérien, cela tout en laissant au pilote le loisir d'accepter ou non cette demande.

Elle concerne un aérodyne piloté pourvu d'un terminal de transmission numérique acheminant à bord, des ordres de modification de trajectoire provenant d'une autorité de contrôle aérien, et retournant vers l'autorité de contrôle aérien l'acceptation ou le refus du pilote de l'aérodyne, d'un pilote automatique et/ou directeur de vol avec des modes de fonctionnement de suivi de consignes d'assiette, de cap, de vitesse sol, de vitesse verticale et d'altitude et d'une interface homme-machine de commande du pilote automatique et/ou directeur de vol permettant de choisir un mode de fonctionnement du pilote automatique et/ou directeur de vol parmi les modes possibles et de paramétrer le mode choisi. Elle a pour objet une interface homme-machine du type précité, pourvue d'un port d'accès qui est relié au terminal de transmission et sur lequel elle reçoit, du terminal de transmission numérique, les ordres de modification de trajectoire émanant d'une autorité de contrôle aérien, de moyens d'affichage affichant les ordres de modification de trajectoire reçus par l'intermédiaire du terminal de transmission numérique, de manière distincte des consignes en cours d'exécution par le pilote automatique et/ou directeur de vol et de moyens de validation imposant au pilote automatique et/ou directeur de vol le mode de fonctionnement et les consignes correspondant à un ordre de modification de trajectoire provenant d'une autorité de contrôle aérien, reçu du terminal de transmission numérique et ayant fait l'objet d'une acceptation par le pilote.

Avantageusement, les moyens d'affichage de l'interface homme-machine de commande du pilote automatique et/ou directeur de vol affichent alternativement, de manières différentes, une consigne d'un mode de fonctionnement en cours d'exécution et une consigne correspondant à un ordre de modification de trajectoire provenant d'une autorité de contrôle aérien et en attente d'acceptation ou de refus par le pilote.

Avantageusement, l'interface homme-machine est pourvue de moyens de détection des incompatibilités existant entre d'une part, le mode de fonctionnement qu'il impose au pilote automatique et/ou directeur de vol et d'autre part un ordre de modification de trajectoire provenant d'une autorité de contrôle aérien et appliqué à son port d'accès, et de moyens d'alarme déclenchés par les moyens de détection d'incompatibilité.

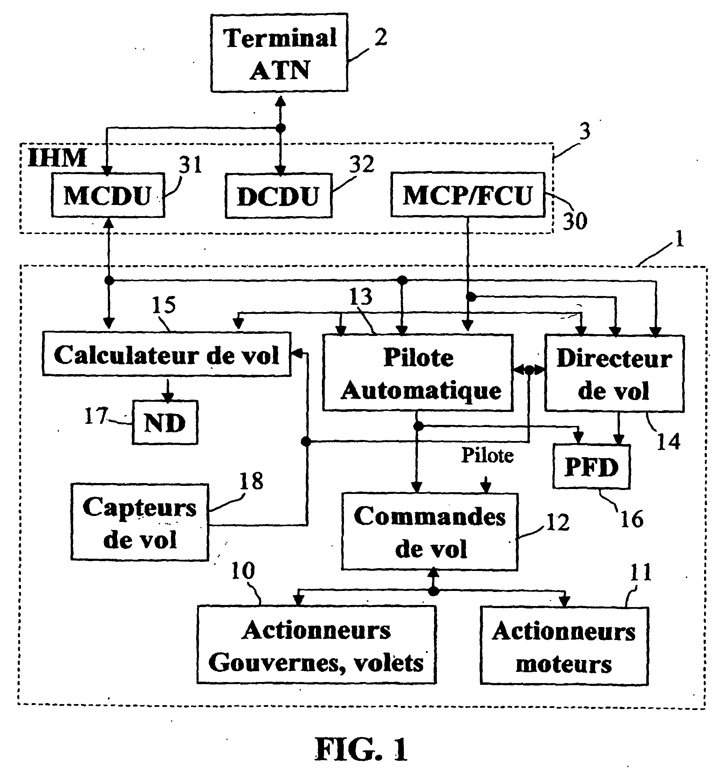

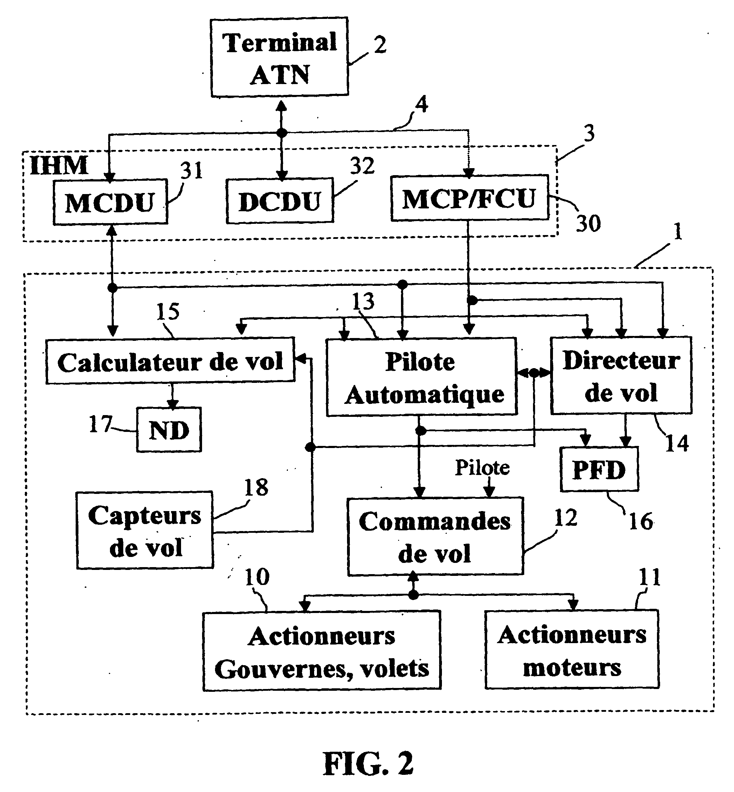

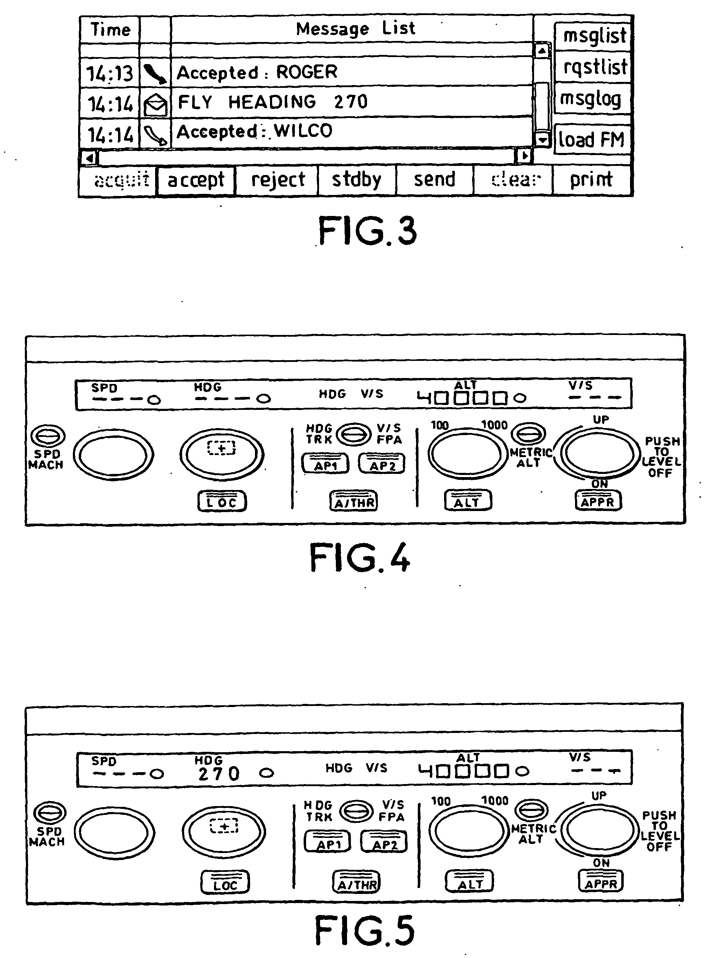

D'autres avantages et caractéristiques de l'invention ressortiront de la description ci-après d'un mode de réalisation donné à titre d'exemple. Cette description sera faite en regard du dessin dans lequel :
- une figure 1 est un schéma bloc illustrant l'agencement habituel, en totale indépendance, des équipements de pilotage et des équipements de transmission à bord d'un aérodyne,
- une figure 2 reprend le schéma bloc de la figure 1, complété par une liaison selon l'invention mettant les équipements de transmission en relation avec les équipements de pilotage afin de leur permettre de retranscrire des "clairances" sous le contrôle du pilote,
- une figure 3 illustre l'écran d'un afficheur dédié aux applications CPDLC d'un réseau de transmission ATN, et
- des figures 4 et 5 illustrent le changement d'affichage d'une interface MCP/FCU de commande de pilote automatique et/ou directeur de vol, avant et après l'acceptation d'une "clairance" par le pilote.

La figure 1 donne un exemple d'un agencement d'équipements que l'on peut trouver actuellement à bord d'un aérodyne en vue de permettre et faciliter son pilotage. On distingue un premier groupe 1 d'équipements dits équipements de vol car ils agissent directement ou indirectement sur les positionnements des gouvernes, volets, etc. et sur les réglages des moteurs de l'aérodyne, un deuxième groupe d'équipements de télécommunication 2 et un troisième groupe 3 d'interfaces homme-machine permettant au pilote de commander et de paramétrer les équipements mis à sa disposition.

Un aérodyne est piloté par l'intermédiaire de surfaces orientables : gouvernes, volets, pales de rotor, etc.., et du régime du ou de ses moteurs de propulsion. A cette fin, il comporte un premier niveau d'équipements de vol permettant un pilotage manuel. Ce premier niveau d'équipements de vol est constitué d'actionneurs 10, 11 de ses surfaces orientables et de ses moteurs de propulsion recevant des consignes de position et de réglage élaborées par des équipements 12 dits de "commandes de vol" recopiant les positions des manettes, pédales et manches à balai servant au pilotage manuel de l'aérodyne. Ce premier niveau d'équipements de vol est souvent complété par un pilote automatique 13 et/ou directeur de vol 14 constituant un deuxième niveau d'équipements et par un calculateur de vol 15 constituant un troisième niveau d'équipements.

Les pilote automatique 13 et/ou directeur de vol 14 facilitent grandement la tâche du pilote en automatisant le suivi de consignes d'assiette, de cap, de pente, de route, d'altitude, de vitesse sol, de vitesse verticale, d'écarts par rapport à des routes, l'un le pilote automatique 13 par action directe sur les commandes de vol 12 et l'autre, le directeur de vol 14, en suggérant au pilote, par l'intermédiaire d'écrans de visualisation PFD 16 (acronyme de l'expression anglo-saxonne :"Primary Flight Display"), les actions à effectuer sur les commandes de vol 12. Ils constituent dans la pratique, un seul et même équipement car ils remplissent les mêmes tâches, la seule différence étant la présence ou non du pilote dans la chaîne d'actionnement des équipements de commande de vol 12. Ils sont accessibles du pilote par deux interfaces homme-machine, une interface MCP/FCU 30 et une interface MCDU 31. L'interface MCP/FCU 30 privilégie la facilité d'utilisation. Elle est placée, en générale en bandeau, à la base du pare-brise de la cabine de pilotage de l'aérodyne et ne permet que la sélection d'un mode de fonctionnement du pilote automatique 13 et du directeur de vol 14 parmi leurs différents modes possibles de fonctionnement : maintien d'assiette, de cap, de pente, de route, d'altitude de vitesse sol, d'écarts par rapport à des routes, et le paramétrage du mode sélectionné. L'interface MCDU 31 privilégie la finesse de contrôle. Elle se présente sous la forme d'une calculette à écran et clavier disposée sur l'accoudoir central d'une cabine de pilotage à deux postes de pilotage côte à côte. Elle permet une commande et un paramétrage fouillé du pilote automatique 13 et du directeur de vol 14.

Le calculateur de vol 15 automatise les tâches de traçage et de suivi du plan de vol de l'aérodyne. Il intervient sur le pilotage de l'aérodyne au niveau du pilote automatique 13 et/ou directeur de vol 14 auxquels il fournit des consignes par l'intermédiaire de l'interface homme-machine MCP/FCU 30. Il est accessible du pilote par l'interface MCDU 30 et par un écran de visualisation ND 17 (acronyme de l'expression anglo-saxonne : "Navigation Display").

Le groupe d'équipements de vol 1 comporte aussi des capteurs dits capteurs de vol 18 car ils permettent au pilote et aux équipements de vol, pilote automatique 13 et/ou directeur de vol 14, calculateur de vol 15, de situer l'aérodyne par rapport à son environnement. Les capteurs de vol sont des capteurs de paramètres aérodynamiques : pression totale, pression statique, angle d'incidence, température de l'air, etc. , des capteurs d'altitude tels qu'un altimètre barométrique ou radioélectrique et des capteurs d'attitude ou de position tels qu'une centrale inertielle ou un récepteur de navigation par satellites. Ils sont plus ou moins nombreux en fonction du degré d'équipement de l'aérodyne.

Le groupe d'équipements de télécommunication 2 est constitué d'un terminal ATN accessible du pilote, pour l'échange d'informations numérisées, au moyen d'une interface DCDU 32 ou de l'interface MCDU 31 selon les aérodynes.

Le réseau ATN est un réseau de transmission numérique plus particulièrement dédié aux échanges d'informations entre les aérodynes et le sol pour des activités à la fois de contrôle aérien dites ATC (acronyme provenant de l'expression anglo-saxonne :"Air Traffic Control") et d'échanges d'informations avec les compagnies aériennes affrétant les aérodynes dites AOC (acronyme provenant de l'expression anglo-saxonne :"Aeronautical Operational Communication"). Parmi les activités ATC du réseau ATN figurent diverses catégories de tâches ou applications spécifiques dont la catégorie des applications CPDLC relatives à la transmission et au traitement des "clairances" ou ordres de modification de trajectoire émis par les autorités de contrôle aérien.

Comme le montre la figure 3, ces "clairances" reçues par le terminal ATN 2 sont affichées avec leurs heures de réception, à l'intention du pilote, sur l'écran de son interface homme-machine DCDU 32 ou MCDU 31. Le pilote, qui peut également recevoir des confirmations en phonie de ces "clairances", a plusieurs réponses convenues possibles, accessibles par des touches apparaissant à la base de l'écran tactile de l'interface homme machine DCDU 32 ou MCDU 31 : acquittement, acceptation, refus, mise en attente, etc. Lorsqu'il a donné son accord en appuyant sur la touche d'acceptation et confirmé cet accord en appuyant sur la touche d'envoie, il lui reste à rentrer dans le pilote automatique 13 et/ou directeur de vol 14 la modification de trajectoire demandée, ce qui implique de sa part, une retranscription du ou des nouveaux paramètres de trajectoire sur l'interface homme-machine MCP/MCU 30 du pilote automatique 13 et/ou directeur de vol 14 et, éventuellement, un changement du mode de fonctionnement du pilote automatique 13 et/ou directeur de vol 14.

La situation illustrée aux figures 3 et 4 est celle d'un ordre de modification de trajectoire impliquant un suivi d'un nouveau cap au 270 alors que l'interface MCP/FCU 30 montre que le pilote automatique 13 et/ou directeur de vol 14 n'étaient programmés que pour un maintien d'altitude à un niveau de 40.000 pieds. Le pilote, après acceptation du nouveau cap demandé par l'autorité de contrôle aérien doit retranscrire ce nouveau cap sur l'interface MCP/FCU 30 et activer un nouveau mode de fonctionnement du pilote automatique 13 et/ou directeur de vol 14 assurant à la fois le maintien de l'altitude à un niveau de 40.000 pieds et la prise et le maintien du nouveau cap au 270, ce qui doit se traduire, en final, par le nouvel affichage de l'interface MCP/FCU 30 montré à la figure 5.

On propose de simplifier la tâche du pilote, lors du traitement d'un ordre de modification de trajectoire en provenance du contrôle aérien. Pour ce faire, on ajoute, comme représenté à la figure 3, une liaison de transmission d'informations 4 acheminant les ordres de modification de trajectoire reçus par le terminal ATN 2 vers l'interface homme-machine MCP/FCU 30 du pilote automatique 13 et/ou directeur de vol 14 et l'on dote, l'interface homme-machine MCP/FCU 30 du pilote automatique 13 et/ou directeur de vol 14, d'une fonction de retranscription automatique des ordres de modification de trajectoire reçus par la liaison de transmission d'information 4 et d'une fonction d'activation, après actionnement par le pilote d'un bouton de confirmation, du mode de fonctionnement du pilote automatique 13 et/ou directeur de vol 14 correspondant à un ordre de modification de trajectoire confirmé par le pilote.

L'ajout de la liaison de transmission numérique 4 implique la présence, sur l'interface homme-machine MCP/FCU 30 du pilote automatique 13 et/ou directeur de vol 14, d'un port d'accès compatible avec le terminal ATN 2 qui peut être réalisé soit en matériel ("hardware" en anglo-saxon), soit en logiciel ("software" en anglo-saxon) lorsque les échanges d'informations entre équipements embarqués passent par un bus avion. Les nouvelles fonctions de retranscription et d'activation des ordres de modification de trajectoire provenant d'une autorité de contrôle aérien sont réalisées en logiciel, l'interface MCP/FCU faisant appel à un ou plusieurs microprocesseurs.

Avec une interface homme-machine MCP/FCU 30 ainsi modifiée, c'est-à-dire capable de recevoir des consignes non seulement du calculateur de vol 15 mais également du terminal ATN 2, l'étape de la figure 4 disparaît. Le pilote voit apparaître directement sur l'afficheur de cette interface, la ou les consignes correspondant à un ordre de modification de trajectoire provenant d'une autorité de contrôle aérien, cela sous une apparence différente d'une consigne en cours d'application par le pilote automatique 13 et/ou le directeur de vol 14, par exemple selon un mode d'affichage clignotant alors que les consignes en cours d'application sont affichées en continu ou encore avec des couleurs d'affichage différentes. Il n'a plus alors qu'à appuyer sur un bouton de confirmation pour que l'ordre de modification de trajectoire émanant d'une autorité de contrôle aérien soit pris en compte par le pilote automatique 13 et/ou directeur de vol 14.

En plus de ces nouvelles fonctions, l'interface homme-machine MCP/FCU peut également être doté d'une fonction de surveillance de l'exécution correcte des ordres de modification de trajectoire reçus d'une autorité de contrôle aérien, générant des alertes visuelles et/ou sonores pour prévenir le pilote d'une incompatibilité entre le guidage de l'aéronef et les ordres reçus de l'autorité de contrôle aérien.

## Revendications

1. Interface homme-machine (30) pour aérodyne piloté pourvu d'un terminal de transmission numérique (2) acheminant à bord des ordres de modification de trajectoire provenant d'une autorité de contrôle aérien, et retournant vers l'autorité de contrôle aérien l'acceptation ou le refus du pilote de l'aérodyne, d'un pilote automatique (13) et/ou directeur de vol (14) avec des modes de fonctionnement de suivi de consignes d'assiette, de cap, de vitesse sol, de vitesse verticale et d'altitude, ladite interface homme-machine (30) permettant de choisir un mode de fonctionnement du pilote automatique (13) et/ou directeur de vol (14) parmi les modes possibles et de paramétrer le mode choisi, et étant **caractérisée en ce qu'**elle est pourvue d'un port d'accès qui est relié au terminal de transmission numérique (2) et sur lequel elle reçoit, du terminal de transmission numérique (2), les ordres de modification de trajectoire émanant de l'autorité de contrôle aérien, de moyens d'affichage affichant les ordres de modification de trajectoire reçus par l'intermédiaire du terminal de transmission numérique (2), de manière distincte des consignes en cours d'exécution par le pilote automatique (13) et/ou directeur de vol (14) et de moyens de validation imposant au pilote automatique (13) et/ou directeur de vol (14) le mode de fonctionnement et les consignes correspondant à un ordre de modification de trajectoire provenant d'une autorité de contrôle aérien, reçu par terminal de transmission numérique (2) et ayant fait l'objet d'une acceptation de la part du pilote.

2. Interface selon la revendication 1, **caractérisée en ce que** ses moyens d'affichage affichent alternativement, de manières différentes, une consigne d'un mode de fonctionnement en cours d'exécution par le pilote automatique 13 et/ou le directeur de vol (14) et une consigne correspondant à un ordre de modification de trajectoire émanant d'une autorité de contrôle aérien et en attente d'acceptation ou de refus par le pilote.

3. Interface selon la revendication 1, **caractérisée en ce que** ses moyens d'affichage affichent sous des couleurs différentes, une consigne d'un mode de fonctionnement en cours d'exécution par le pilote automatique 13 et/ou le directeur de vol (14) et une consigne correspondant à un ordre de modification de trajectoire émanant d'une autorité de contrôle aérien et en attente d'acceptation ou de refus par le pilote.

4. Interface selon la revendication 1, **caractérisée en ce qu'**elle comporte en outre des moyens de détection des incompatibilités existant entre d'une part, le mode de fonctionnement qu'il impose au pilote automatique (13) et/ou directeur de vol (14) et d'autre part un ordre de modification de trajectoire provenant d'une autorité de contrôle aérien et appliqué à son port d'accès, et de moyens d'alarme déclenchés par les moyens de détection d'incompatibilité.

## Patentansprüche

1. Mensch-Maschine-Schnittstelle (30) für ein gesteuertes Luftfahrzeug schwerer als Luft, das mit einem digitalen Übertragungsterminal (2), das von einer Luftverkehrskontrollbehörde kommende Streckenänderungsbefehle an Bord überträgt und die Zustimmung oder die Weigerung des Piloten des Luftfahrzeugs zur Luftverkehrskontrollbehörde zurücksendet, und mit einem Autopiloten (13) und/oder einer Flugleitanlage (14) mit Betriebsmodi der Nachführung von Fluglagen-, Kurs-, Grundgeschwindigkeits-, Vertikalgeschwindigkeits- und Flughöhen-Anweisungen ausgestattet ist, wobei die Mensch-Maschine-Schnittstelle (30) es ermöglicht, unter den möglichen Modi einen Betriebsmodus des Autopiloten (13) und/oder der Flugleitanlage (14) auszuwählen und den gewählten Modus zu parametrieren, **dadurch gekennzeichnet, dass** sie mit einem Anschluss, der mit dem digitalen Übertragungsterminal (2) verbunden ist und an dem sie vom digitalen Übertragungsterminal (2) die von der Luftverkehrskontrollbehörde kommenden Streckenänderungsbefehle empfängt, mit Anzeigemitteln, die die über das digitale Übertragungsterminal (2) empfangenen Streckenänderungsbefehle anders als die gerade von dem Autopiloten (13) und/oder der Flugleitanlage (14) durchgeführten Anweisungen anzeigt, und mit Validierungsmitteln ausgestattet ist, die dem Autopiloten (13) und/oder der Flugleitanlage (14) den Betriebsmodus und die Anweisungen aufzwingen, die einem von einer Luftverkehrskontrollbehörde kommenden Streckenänderungsbefehl entsprechen, der vom digitalen Übertragungsterminal (2) empfangen wurde und Gegenstand einer Zustimmung durch den Piloten war.

2. Schnittstelle nach Anspruch 1, **dadurch gekennzeichnet, dass** ihre Anzeigemittel eine Anweisung eines gerade vom Autopiloten (13) und/oder von der Flugleitanlage (14) durchgeführten Betriebsmodus und eine einem von einer Luftverkehrskontrollbehörde kommenden und auf eine Zustimmung oder eine Weigerung des Piloten wartenden Streckenänderungsbefehl entsprechende Anweisung abwechselnd auf verschiedene Weise anzeigen.

3. Schnittstelle nach Anspruch 1, **dadurch gekennzeichnet, dass** ihre Anzeigemittel eine Anweisung eines gerade vom Autopiloten (13) und/oder von der Flugleitanlage (14) durchgeführten Betriebsmodus und eine einem von einer Luftverkehrskontrollbehörde kommenden und auf eine Zustimmung oder Weigerung des Piloten wartenden Streckenänderungsbefehl entsprechende Anweisung in verschiedenen Farben anzeigen.

4. Schnittstelle nach Anspruch 1, **dadurch gekennzeichnet, dass** sie außerdem Mittel zur Erfassung von Inkompatibilitäten, die zwischen einerseits dem Betriebsmodus, den sie dem Autopiloten (13) und/oder der Luftleitanlage (14) aufzwingt, und andererseits einem von einer Luftverkehrskontrollbehörde kommenden und an ihren Anschluss angelegten Streckenänderungsbefehl bestehen, und Alarmeinrichtungen aufweist, die von den Mitteln zur Erfassung der Inkompatibilitäten ausgelöst werden.

## Claims

1. Man/machine interface (30) for piloted aerodyne provided with a digital transmission terminal (2) routing on board trajectory modification orders originating from an air traffic control authority, and returning the aerodyne pilot's acceptance or refusal to the air traffic control authority, with an automatic pilot (13) and/or flight director (14) having operating modes for tracking directives for attitude, heading, ground speed, vertical speed and altitude, the said man/machine interface (30) making it possible to choose an operating mode of the automatic pilot (13) and/or flight director (14) from among the possible modes and to tailor the mode chosen, and being **characterized in that** it is provided with an access port which is linked to the digital transmission terminal (2) and on which it receives, from the digital transmission terminal (2), the trajectory modification orders emanating from the air traffic control authority, with display means displaying the trajectory modification orders received by way of the digital transmission terminal (2), in a manner distinct from the directives currently being executed by the automatic pilot (13) and/or flight director (14) and enabling means imposing on the automatic pilot (13) and/or flight director (14) the operating mode and the directives corresponding to a trajectory modification order originating from an air traffic control authority, received by digital transmission terminal (2) and having formed the subject of an acceptance on the part of the pilot.

2. Interface according to Claim 1, **characterized in that** its display means alternately display, in various ways, a directive of an operating mode currently being executed by the automatic pilot (13) and/or the flight director (14) and a directive corresponding to a trajectory modification order emanating from an air traffic control authority and on standby pending acceptance or refusal by the pilot.

3. Interface according to Claim 1, **characterized in that** its display means display under different colours a directive of an operating mode currently being executed by the automatic pilot (13) and/or the flight director (14) and a directive corresponding to a trajectory modification order emanating from an air traffic control authority and on standby pending acceptance or refusal by the pilot.

4. Interface according to Claim 1, **characterized in that** it furthermore comprises means for detecting incompatibilities existing between on the one hand the operating mode that it imposes on the automatic pilot (13) and/or flight director (14) and on the other hand a trajectory modification order originating from an air traffic control authority and applied to its access port, and alarm means triggered by the means for detecting incompatibility.
